# EUROPEAN PATENT APPLICATION

(11) **EP 4 749 811 A1**
(43) Date of publication of application: **27.05.2026**
(21) Application number: 24841934.3
(22) Date of filing: 29.02.2024
(51) Int. Cl.: H01M 50/588, H01M 50/593, H01M 10/42

(54) **BATTERY PACK, BATTERY CLUSTER, AND ENERGY STORAGE SYSTEM DEVICE**

(30) Priority: 17.07.2023 CN 202310875689
(71) Applicant: Sungrow Power Supply Co., Ltd., Hefei, Anhui 230088 (CN)
(72) Inventor: GAO, Yuan, Hefei, Anhui 230088 (CN); SU, Jinguo, Hefei, Anhui 230088 (CN); GE, Jingyu, Hefei, Anhui 230088 (CN); XU, Bo, Hefei, Anhui 230088 (CN); ZHOU, Meng, Hefei, Anhui 230088 (CN); WANG, Hao, Hefei, Anhui 230088 (CN); DONG, Puyun, Hefei, Anhui 230088 (CN); HE, Wei, Hefei, Anhui 230088 (CN)
(74) Representative: Epping - Hermann - Fischer
(86) International application number: PCT/CN2024/079222
(87) International publication number: WO 2025/015930

(57) **Abstract**

Provided are a battery pack, a battery cluster, and an energy storage system device. The battery pack specifically comprises: at least one battery cell (10) and at least one acquisition connector, wherein the battery cell (10) is connected between two electrodes of the battery pack, and the battery cell (10) is connected to the acquisition connector; the outside of a charged part in the battery pack is covered with a first insulating material (01); and the charged part in the battery pack comprises an electrode of the battery cell (10). The outside of the charged part in the battery pack is covered with the first insulating material (01), and the first insulating material can form an insulating layer between the charged part and an environment, i.e., the charged part is isolated from the environment, so that the battery pack will not be affected by condensation, thus reducing the possibility of electrical safety accidents in the battery pack, thereby improving the electrical safety performance of the battery pack.

## Description

The present application claims the priority to Chinese Patent Application No. 202310875689.1, titled "BATTERY PACK, BATTERY CLUSTER AND ENERGY STORAGE SYSTEM DEVICE", filed on July 17, 2023 with the China National Intellectual Property Administration, which is incorporated herein by reference in its entirety.

### FIELD

The present application relates to the technical field of power electronics, and in particular to a battery pack, a battery cluster and an energy storage system device.

### BACKGROUND

Currently, an enclosure of a liquid-cooled energy storage system adopts a protection rating of IP54 or higher, and the internal battery packs generally follow the design approach of automotive power batteries, often utilizing sealed housing designs with a protection rating of IP65 or above, which prevents electrical safety problems caused by condensation inside the battery packs.

However, once the sealed housing of the battery pack suffers from a gas leakage due to process issues or other factors, condensation may occur inside the battery pack, which may lead to electrical safety accidents, and thus reduce the safety performance of the battery pack.

Therefore, a technical issue to be addressed is how to improve the safety performance of the battery pack.

### SUMMARY

In view of this, a battery pack, a battery cluster and an energy storage system device are provided according to the present application, to improve the safety performance of the battery pack.

In order to achieve the above object, the following technical solutions are provided in embodiments of the present application.

In a first aspect, a battery pack is provided according to the present application, including at least one battery cell and at least one acquisition connector;
the at least one battery cell is connected between two electrodes of the battery pack, and the at least one battery cell is connected to the at least one acquisition connector;
charged parts in the battery pack are externally coated with a first insulating material; and
the charged parts include electrodes of the at least one battery cell.

Optionally, the charged parts further include at least one of the acquisition connector and an electrical connector for connecting the battery cell.

Optionally, the battery pack further includes an internal heat exchange structure, where a surface of the internal heat exchange structure is adhered to a surface of each of the at least one battery cell via a heat-conducting medium.

Optionally, surfaces of the battery cell that are not adhered to the internal heat exchange structure are externally coated with a second insulating material; and/or, surfaces of the internal heat exchange structure that are not adhered to the battery cell are externally coated with a third insulating material.

Optionally, the battery cell is externally coated with a fourth insulating material.

Optionally, the battery cell is provided with an explosion-proof valve.

Optionally, the battery pack further includes a supporting structure, where the battery cell is arranged on the supporting structure.

Optionally, the supporting structure is externally coated with a fifth insulating material.

Optionally, the insulating material is a liquid insulating material.

Optionally, the liquid insulating material has a fluidity greater than a predetermined value, and the liquid insulating material is solidified in a potting cavity to be coated onto a corresponding position.

In a second aspect, a battery cluster is provided according to the present application, including at least one battery pack as described in any one of the above solutions in the first aspect of the present application.

The battery pack is connected between two electrodes of the battery cluster.

Optionally, an internal heat exchange structure is provided in the battery pack, and the battery cluster further includes an external heat exchange structure.

The external heat exchange structure has a cold end connected to a cold end of the internal heat dissipation structure in the battery pack, and a hot end connected to a hot end of the internal heat dissipation structure in the battery pack.

In a third aspect, an energy storage system device is provided according to the present application, including a housing, at least one power conversion device, and at least one battery cluster as described in any one of the above solutions in the second aspect of the present application.

Both the power conversion device and the battery cluster are arranged inside the housing.

The power conversion device has a first side connected to the at least one battery cluster, and a second side connected to an electrical port of the energy storage system device.

In an embodiment, the at least one battery cluster each includes an external heat exchange structure, and all the external heat exchange structures are integrated together.

In the above technical solutions, a battery pack is provided according to the present application, including at least one battery cell and at least one acquisition connector. The battery cell is connected between two electrodes of the battery pack and is connected to the acquisition connector. Charged parts in the battery pack are externally coated with the first insulating material, where the charged parts in the battery pack include electrodes of the battery cell. Since the charged parts in the battery pack are externally coated with the first insulating material, the first insulating material can form an insulating layer between the charged parts and the environment, i.e., the charged parts are isolated from the environment, preventing the battery pack from being affected by condensation, thereby reducing the possibility of electrical safety accidents in the battery pack and thus improving the electrical safety performance of the battery pack.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic perspective view of a battery pack according to an embodiment of the present application;
FIG. 2 is a schematic cross-sectional view of the battery pack shown in FIG. 1;
FIG. 3 is a schematic perspective view of a battery pack according to another embodiment of the present application;
FIG. 4 is a schematic cross-sectional view of the battery pack shown in FIG. 3;
FIG. 5 is a schematic cross-sectional view of a battery pack according to yet another embodiment of the present application;
FIG. 6 is a schematic cross-sectional view of a battery pack according to still another embodiment of the present application; and
FIG. 7 is a schematic diagram of an energy storage system device according to an embodiment of the present application.

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

The relationship terms such as "first", "second" and the like herein are only used to distinguish one entity or operation from another, rather than to necessitate or imply that an actual relationship or order exists between the entities or operations. Furthermore, the terms such as "include", "comprise" or any other variations are intended to cover non-exclusive "include", thus a process, a method, an object or a device including a series of factors not only include the listed factors, but also include other factors not explicitly listed, or also include inherent factors of the process, the method, the object or the device. Without more limitations, a factor defined by a sentence "include one..." does not exclude a case that there is another same factor in the process, the method, the object or the device including the described factor.

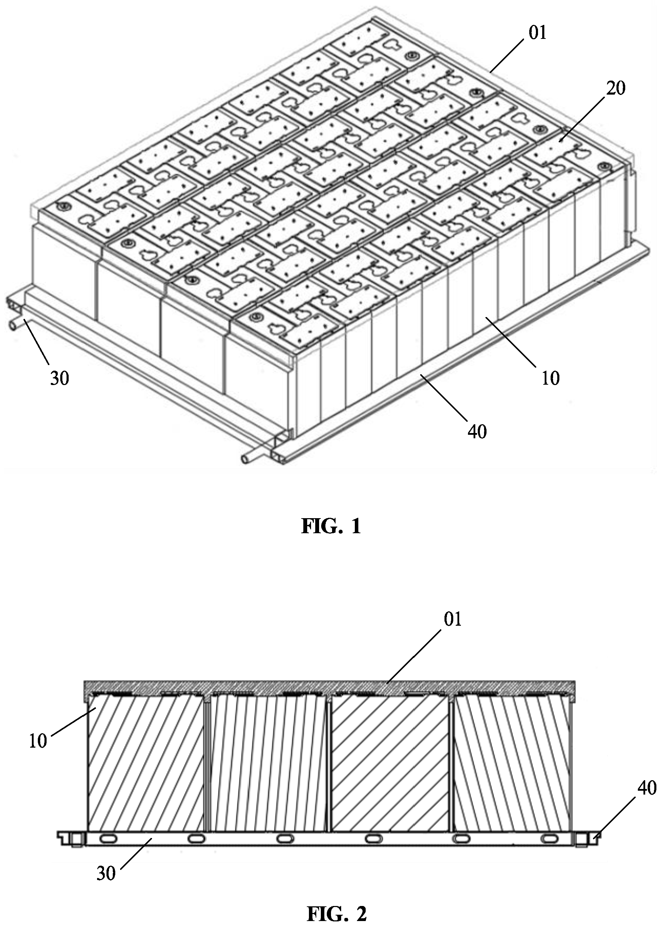

A battery pack is provided according to an embodiment of the present application, to improve the safety performance of the battery pack. The specific structure of the battery pack may refer to FIGS. 1 and 2. Specifically, the battery pack includes at least one battery cell 10 and at least one acquisition connector (for simplifying the figures, the acquisition connector is not shown in FIGS. 1 and 2). The connections of the components are described as follows.

The battery cell 10 is connected between two electrodes of the battery pack and is connected to the acquisition connector.

For example, as shown in FIG. 1, the battery pack includes multiple battery cells 10, all of which are connected in series. For another example, the battery pack includes multiple battery cells 10 which are divided into two groups, the battery cells 10 in each group are connected in series to form a series-connected branch, and two electrodes of each series-connected branch are respectively connected to the two electrodes of the battery pack.

It should be noted that an explosion-proof valve may be provided on the battery cell in order to further improve the safety performance of the battery pack.

The acquisition connector is configured for acquiring a current, voltage and temperature of the battery cell 10.

Optionally, the acquisition connector may be an element with an insulating layer on itself, such as a wiring harness. Alternatively, the acquisition connector may be an element without an insulating layer, such as a copper busbar. Examples of the acquisition connector are not limited herein and may depend on actual situations.

It should be noted that the battery pack may include a battery management unit (BMU) configured for monitoring the current, voltage and temperature of the battery cells 10, where the battery cells 10 are connected to the battery management unit via the acquisition connector.

Charged parts in the battery pack are externally coated with a first insulating material 01.

The charged parts in the battery pack may include an electrode pole of the battery cell 10, or may include an electrode pole of the battery cell 10 and at least one of the acquisition connector and an electrical connector 20 for connection between the battery cells 10. Examples of the charged parts are not limited herein and may depend on actual situations, all falling within the scope of protection of the present application.

For example, as shown in FIG. 1 or 2, the electrode pole of the battery cell 10 and the electrical connector 20 for connecting battery cells 10 are externally coated with the first insulating material 01.

Optionally, the electrical connector 20 for connecting battery cells 10 may be an element with an insulating layer on itself, such as a wiring harness. Alternatively, the electrical connector 20 for connecting battery cells 10 may also be an element without an insulating layer, such as a copper busbar. Examples of the electrical connector are not limited herein and may depend on actual situations.

Since the charged parts in the battery pack are externally coated with the first insulating material 01, the first insulating material 01 can form an insulating layer between the charged parts in the battery pack and the environment, i.e., the charged parts are isolated from the environment, preventing the battery pack from being by condensation, thereby reducing the possibility of electrical safety accidents in the battery pack and thus improving the electrical safety performance of the battery pack.

It should be noted that since the battery pack is not susceptible to condensation, it no longer requires a sealed housing with a protection rating of IP 65 or higher, which eliminates the need for cumbersome machining and testing processes for the sealed housing with high protection rating, avoids complex procedures, simplifies the design and reduces overall material usage, thereby reducing the overall cost of the battery pack. Moreover, for the sealed housing with a high protection rating, a pressure balancing structure such as a pressure relief valve or a venting valve is required to be provided externally to prevent the housing from cracking, while the battery pack according to present application does not require the pressure balancing structure, thereby further reducing its cost.

A battery pack is provided according to another solution of the embodiment, the battery pack is similar to that described in the above solutions of the embodiment, except that the battery cell 10 is externally coated with a fourth insulating material.

A battery pack is provided according to a solution of another embodiment, structural details of which are shown in FIGS. 1 to 4. On the basis of the above solutions, the battery pack further includes an internal heat exchange structure 30. The specific connection between the internal heat exchange structure 30 and other components are described as follows.

The internal heat exchange structure 30 has a surface adhered to surfaces of all the battery cells 10 via a heat-conducting medium. The internal heat exchange structure 30 is used to exchange heat with the battery cells 10 to cool down the battery cells 10.

For example, as shown in FIG. 1, all the battery cells 10 are arranged in a cuboid configuration, and the upper surface of the internal heat exchange structure 30 is adhered to lower surfaces of all the battery cells 10 via the heat-conducting medium.

Optionally, the heat-conducting medium may be a heat-conducting structural adhesive or a heat-conducting pad. In practical applications, the present application includes but is not limited to these examples. The solutions are not specifically limited to the above examples and can be determined based on the actual situation.

Optionally, the internal heat exchange structure 30 may be a liquid-cooling plate, i.e., the battery pack is liquid-cooled for heat dissipation. In practical applications, the present application includes but is not limited to these examples. For example, the internal heat exchange structure 30 may be an air-cooling heat dissipation structure. Examples of heat dissipation modes of the internal heat exchange structure are not limited herein and may depend on actual situations, all falling within the scope of protection of the present application.

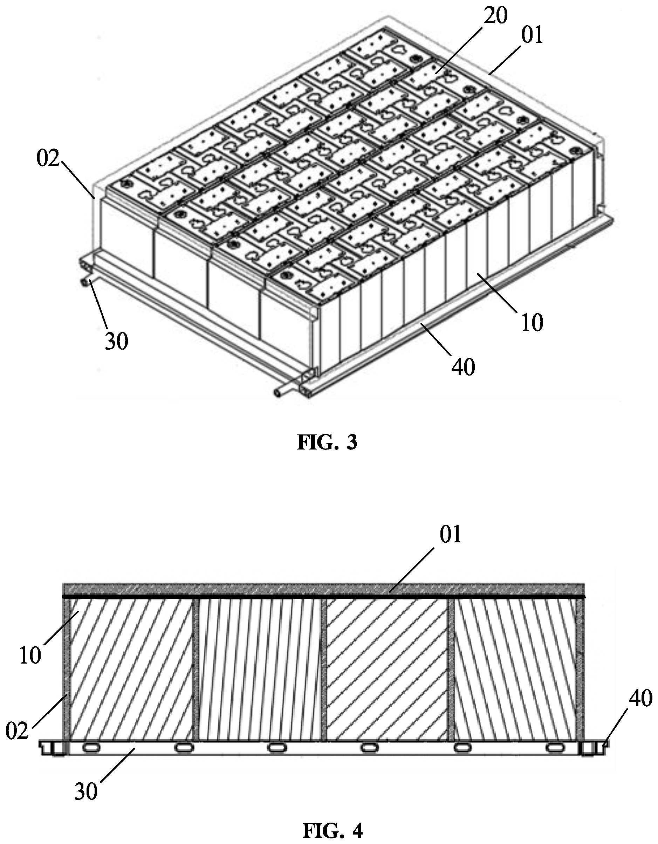

Yet another solution of the battery pack is provided according to the embodiment of the present application. This solution is similar to the above solution of the embodiment, with the difference lying in that: in this solution, as shown in FIG. 3 or 4, surfaces of each of the battery cells 10 that are not adhered to the internal heat exchange structure 30 are externally coated with a second insulating material 02; and/or, surfaces of the internal heat exchange structure 30 that are not adhered to the battery cells 10 are externally coated with a third insulating material.

A battery pack is provided according to a solution of yet another embodiment, structural details of which are shown in FIGS. 1 to 4. On the basis of the above solutions, the battery pack further includes a supporting structure 40, where the battery cells 10 are arranged on the supporting structure 40.

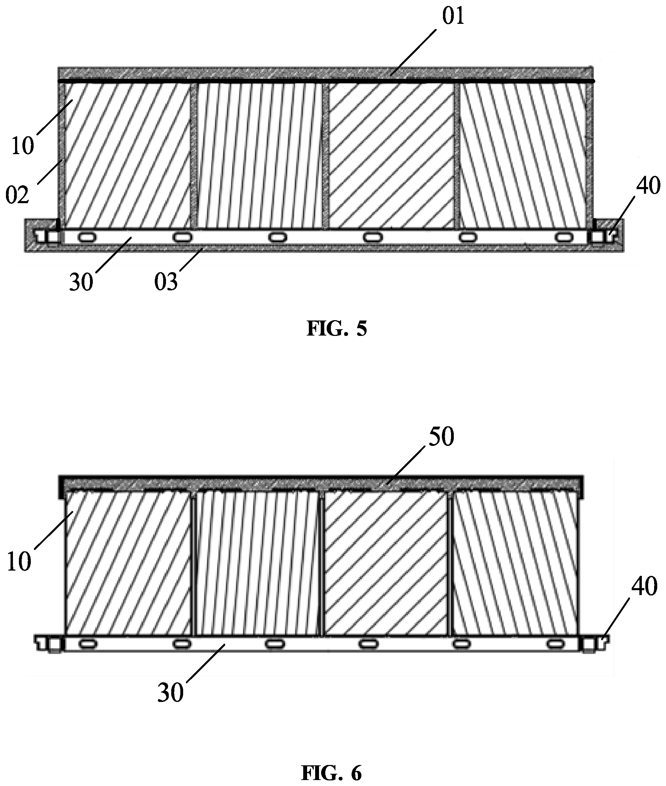

Another solution of the battery pack is provided according to this embodiment. This solution is similar to the above solution of this embodiment, with the difference lying in that: in this solution, the supporting structure 40 is externally coated with a fifth insulating material 03, as shown in FIG. 5.

In any one of the above embodiments, the insulating material may be a solid insulating material or a liquid insulating material. Examples of the insulating material are not limited herein and may depend on actual situations, all falling within the scope of protection of the present application.

In a case that the insulating material is a liquid insulating material, the insulating material may be a liquid insulating material with a fluidity greater than a predetermined value, or a liquid insulating material with a fluidity less than a predetermined value. Examples of the liquid insulating material are not limited herein and may depend on actual situations, all falling within the scope of protection of the present application.

It should be noted that the predetermined value is a demarcation value for determining the level of fluidity of the liquid insulating material. In other words, a fluidity greater than the predetermined value indicates a high level of fluidity of the liquid insulating material, while a fluidity less than the predetermined value indicates a low level of fluidity of the liquid insulating material.

In a case that the insulating material is a liquid insulating material with a fluidity less than the predetermined value, the liquid insulating material may be directly applied onto the corresponding portion, to form an insulating layer after solidification. In a case that the insulating material is a liquid insulating material with a fluidity greater than the predetermined value, the insulating material can be solidified in a potting cavity 50 to be coated onto the corresponding portion to form an insulating layer, as shown in FIG. 6.

For example, as shown in FIG. 6, all the battery cells 10 are arranged in a cuboid configuration, and the potting cavity 50 is provided on top of all the battery cells 10.

It should be noted that, the process of forming the insulating layer at the corresponding portion through the potting cavity 50 includes: arranging the potting cavity 50 at the corresponding portion; then injecting the liquid insulating material with a fluidity greater than the predetermined value into the potting cavity 50; and then the insulating layer is formed when the liquid insulating material is completely solidified.

Optionally, the potting cavity 50 may be a preformed mold or a prefabricated structural member. In practical applications, the present application includes but is not limited to these examples. Examples of the potting cavity are not limited herein and may depend on actual situations, all falling within the scope of protection of the present application.

It should be noted that the potting cavity 50 may be a detachable part, i.e., the potting cavity 50 can be removed after the liquid insulating material is completely solidified. Alternatively, the potting cavity 50 may be a non-detachable part, i.e., the potting cavity 50 cannot be removed after the liquid insulating material is completely solidified. Examples of the potting cavity are not limited herein and may depend on actual situations, all falling within the scope of protection of the present application.

Specifically, the first insulating material, the third insulating material, the fourth insulating material, and the fifth insulating material each may be a polyurethane potting compound, a silicone rubber, a UV potting compound, an epoxy resin, or even a hot-melt potting compound. In practical applications, the present application includes but is not limited to these examples. Examples of the insulating materials are not limited herein and may depend on actual situations, all falling within the scope of protection of the present application.

Specifically, the fourth insulating material may be a polyurethane potting compound, a silicone rubber, a UV potting compound, an epoxy resin, an insulating adhesive, a blue tape, or even a hot-melt potting compound. In practical applications, the present application includes but is not limited to these examples. Examples of the fourth insulating material are not limited herein and may depend on actual situations, all falling within the scope of protection of the present application.

A battery cluster is provided according to another embodiment of the present application, including at least one battery pack described in the above embodiments, where the battery pack is connected between two electrodes of the battery cluster.

For example, the battery cluster includes multiple battery packs, all of which are connected in series. For another example, the battery cluster includes multiple battery packs which are divided into two groups, the battery packs in each group are connected in series to form a series-connected branch, and two electrodes of each series-connected branch are respectively connected to the two electrodes of the battery cluster.

In another solution according to the embodiment of the present application, the battery cluster is applicable to the case where the internal heat exchange structure 30 is provided in the battery pack. On the basis of the above solution, the battery cluster in this solution further includes an external heat exchange structure.

The external heat exchange structure has a cold end connected to a cold end of the internal heat dissipation structure in the battery pack, and a hot end connected to a hot end of the internal heat dissipation structure in the battery pack. During operation, a cooling medium exchanges heat with the external environment through the external heat exchange structure, releasing its heat to the external environment; next, the cooling medium flows into the internal heat exchange structure 30, and exchanges heat with the battery cells through the internal heat exchange structure 30, taking away the heat of the battery cells; finally, the cooling medium flows back to the external heat exchange structure.

In a case that the internal heat exchange structure 30 is a liquid-cooling plate, the cooling medium is a liquid cooling medium, such as water. In a case that the internal heat exchange structure 30 is an air-cooling heat dissipation structure, the cooling medium is air.

It should be noted that, in actual applications, the battery cluster includes a battery cluster management unit (CMU), which is in communication with the BMU in the battery packs to monitor the current, voltage and temperature of the battery packs. In addition, in the present embodiment, the CMU may also be in communication with the external heat exchange structure for regulating a rate of heat exchange between the cooling medium and the external environment as well as a flow rate of the cooling medium.

In addition, the CMU may be split into a temperature-control module for monitoring the temperature of the battery packs and a control module for monitoring the current and voltage of the battery packs. In practical applications, the present application includes but is not limited to above splitting manner. Examples of the splitting manner are not limited herein and may depend on actual situations, all falling within the scope of protection of the present application.

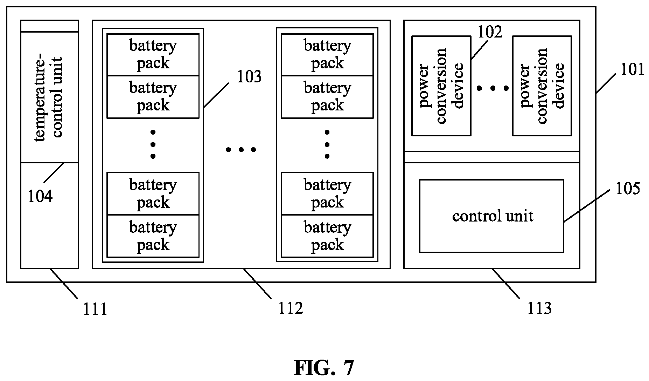

An energy storage system device is provided according to another embodiment of the present application, the structural details of which are shown in FIG. 7. Specifically, the energy storage system device includes a housing 101, at least one power conversion device 102, and at least one battery cluster 103 described in the above embodiments of the present application. The connections of the components are described as follows.

Both the power conversion device 102 and the battery cluster 103 are arranged inside the housing 101.

All the battery clusters 103 may be arranged in a separate space inside the housing 101, as shown in FIG. 7; alternatively, the battery clusters 103 may be arranged in a space inside the housing 101 together with other components. Examples of the arrangement of the battery clusters are not limited herein and may depend on actual situations, all falling within the scope of protection of the present application. Preferably, all the battery clusters 103 are arranged in a separate space inside the housing 101, so that the battery clusters 103 do not interfere with other components.

The power conversion device 102 has a first side connected to the at least one battery cluster 103, and a second side connected to an electrical port of the energy storage system device.

In practical applications, all the CMUs may be integrated together or arranged separately. Examples of the arrangement of the CMUs are not limited herein and may depend on actual situations, all falling within the scope of protection of the present application.

All the power conversion devices 102 and all the CMUs may be arranged in a separate space inside the housing 101, or may be arranged in a space inside the housing 101 together with other components. Examples of the arrangement of the power conversion devices and the CMUs are not limited herein and may depend on actual situations, all falling within the scope of protection of the present application. Preferably, the power conversion devices 102 and the CMUs are arranged in a separate space inside the housing 101, so that the power conversion devices 102 and the CMUs do not interfere with other components.

In a case that the CMU in each battery cluster 103 is split into the temperature-control module and the control module, all the temperature-control modules may be integrated into a temperature-control unit, and all the control modules may be integrated into a control unit; alternatively, all the temperature-control modules and all the control modules may be integrated together. Examples of the arrangement of the temperature-control module and the control module are not limited herein and may depend on actual situations, all falling within the scope of protection of the present application.

The temperature-control unit and the control unit may be arranged separately, or may be arranged together in a separate space, or may be arranged in a space together with other components. Examples of the arrangement of the temperature-control unit and the control unit are not limited herein and may depend on actual situations, all falling within the scope of protection of the present application.

In a case that each battery cluster 103 includes the external heat exchange structure, all the external heat exchange structures may be integrated together or arranged separately. Examples of the arrangement of the external heat exchange structures are not limited herein and may depend on actual situations, all falling within the scope of protection of the present application. If all the external heat exchange structures are integrated together and all the temperature-control modules are integrated in the temperature-control unit, all the external heat exchange structures are integrated in the temperature-control unit.

For example, as shown in FIG. 7, all the temperature-control modules are integrated in the temperature-control unit 104, all the external heat exchange structures are integrated in the temperature-control unit 104, and all the control modules are integrated into the control unit 105. The temperature-control unit 104 is arranged in a separate space inside the housing 101, which may be referred to as a temperature-control unit compartment 111. All the battery clusters 103 are arranged in another separate space inside the housing 101, which may be referred to as a battery compartment 112. All the power conversion devices 102 and the control unit 105 are arranged in yet another separate space, which may be referred to as an electrical compartment 113.

The battery packs in the battery cluster 103 are the battery packs described in the above embodiments, and all the battery packs described in the above embodiments would not be affected by condensation. Accordingly, on the one hand, a shell for the battery pack itself in the energy storage system device can be omitted, and on the other hand, the energy storage system device does not require additional device for maintaining the humidity of the air in the energy storage system device within a reasonable range. Therefore, the energy storage system device offers reduced energy consumption and increased efficiency. In addition, the energy storage system device offers faster firefighting action and higher energy density.

For the above description of the disclosed embodiments, features recited in the various embodiments in this specification may be replaced or combined with one another to enable those skilled in the art to implement or use the present application. The embodiments described hereinabove are only preferred embodiments of the present application, and are not intended to limit the scope of the present application in any form. Although the present application is disclosed by the above preferred embodiments, the preferred embodiments should not be interpreted as a limitation to the present application. For those skilled in the art, many variations, modifications or equivalent replacements may be made to the technical solutions of the present application by using the methods and technical contents disclosed hereinabove, without departing from the scope of the technical solutions of the present application. Therefore, any simple modifications, equivalent replacements and modifications, made to the above embodiments based on the technical essences of the present application without departing from the technical solutions of the present application, are deemed to fall into the scope of the technical solution of the present application.

## Claims

1. A battery pack, comprising:
at least one battery cell; and
at least one acquisition connector;
wherein the at least one battery cell is connected between two electrodes of the battery pack, and the at least one battery cell is connected to the at least one acquisition connector;
charged parts in the battery pack are externally coated with a first insulating material; and
the charged parts comprise electrodes of the at least one battery cell.

2. The battery pack according to claim 1, wherein the charged parts further comprise at least one of the acquisition connector and an electrical connector for connecting the battery cell.

3. The battery pack according to claim 1, further comprising an internal heat exchange structure, wherein a surface of the internal heat exchange structure is adhered to a surface of each of the at least one battery cell via a heat-conducting medium

4. The battery pack according to claim 3, wherein
surfaces of each of the at least one battery cell that are not adhered to the internal heat exchange structure are externally coated with a second insulating material; and/or,
surfaces of the internal heat exchange structure that are not adhered to the at least one battery cell are externally coated with a third insulating material.

5. The battery pack according to claim 1, wherein each of the at least one battery cell is externally coated with a fourth insulating material.

6. The battery pack according to claim 1, wherein each of the at least one battery cell is provided with an explosion-proof valve.

7. The battery pack according to claim 1, further comprising a supporting structure, wherein the at least one battery cell is arranged on the supporting structure.

8. The battery pack according to claim 7, wherein the supporting structure is externally coated with a fifth insulating material.

9. The battery pack according to any one of claims 1 to 8, wherein the insulating material is a liquid insulating material

10. The battery pack according to claim 9, wherein the liquid insulating material has a fluidity greater than a predetermined value, and the liquid insulating material is solidified in a potting cavity to be coated onto a corresponding position.

11. A battery cluster, comprising:
at least one battery pack according to any one of claims 1 to 10, wherein the at least one battery pack is connected between two electrodes of the battery cluster.

12. The battery cluster according to claim 11, wherein an internal heat exchange structure is provided in the battery pack, and the battery cluster further comprises an external heat exchange structure; and wherein
the external heat exchange structure has a cold end connected to a cold end of the internal heat dissipation structure in the battery pack, and a hot end connected to a hot end of the internal heat dissipation structure in the battery pack.

13. An energy storage system device, comprising:
a housing;
at least one power conversion device; and
at least one battery cluster according to claim 11 or 12; wherein
both the at least one power conversion device and the at least one battery cluster are arranged inside the housing; and
the at least one power conversion device has a first side connected to the at least one battery cluster, and a second side connected to an electrical port of the energy storage system device.

14. The energy storage system device according to claim 13, wherein each of the at least one battery cluster comprises an external heat exchange structure, and all the external heat exchange structures are integrated together.
